# EUROPÄISCHE PATENTANMELDUNG

(11) **EP 3 354 601 A1**
(43) Veröffentlichungstag der Anmeldung: **01.08.2018**
(21) Anmeldenummer: 18156888.2
(22) Anmeldetag: 13.02.2017
(51) Int. Cl.: B65G 25/06, B65G 65/44, B65G 67/24, B65D 88/54

(54) **BUNKER MIT HIN- UND HERGEHENDEM FÖRDERER**

(30) Priorität: 11.02.2016 DE 202016100708 U
(62) Teilanmeldung aus: 17155866.1
(71) Anmelder: Westeria Fördertechnik GmbH, 48346 Ostbevern (DE)
(72) Erfinder: Westbrock, Bernhard, 48291 Telgte (DE)
(74) Vertreter: Habbel, Ludwig

(57) **Zusammenfassung**

Bei einem zum Speichern von Material dienender Bunker (1), mit einem vor und zurück bewegliche Stäbe (3) aufweisenden, als so genannter "Walking Floor" ausgestalteten Boden (2), wobei die Stäbe (3) in einer so genannten Vorwärtsrichtung, wenn mehrere Stäbe (3) das Material in Förderrichtung des Walking Floors transportieren, und eine vergleichsweise geringere Anzahl von Stäben (3) in einer Rückwärtsbewegung zurückgezogen werden, schlägt die Erfindung vor, dass die Geschwindigkeiten der Stäbe (3) in der Vorwärtsrichtung und bei der Rückwärtsbewegung unterschiedlich sind.

## Beschreibung

Die Erfindung betrifft einen Materialbunker. Der Bunker ist durch zwei seitliche Wände begrenzt und weist unten einen Förderboden auf, der dazu dient, das im Bunker enthaltene Material zu einem Ende des Bunkers, also zu einer Stirnseite des Bunkers zu fördern, wobei dieser Boden als so genannter "Walking Floor" ausgestaltet ist, also mehrere Stäbe aufweist, die parallel nebeneinander angeordnet sind und jeweils vorwärts und rückwärts bewegt werden können. Bei der Vorwärtsbewegung werden mehrere Stäbe gleichzeitig bewegt, so dass das auf dem Boden aufliegende Material zusammen mit dieser Mehrzahl von Stäben in Förderrichtung des Walking Floors transportiert wird. Zurückgezogen wird hingegen jeweils eine vergleichsweise geringere Anzahl von Stäben, so dass das Material im Wesentlichen auf den übrigen, nicht zurückbewegten Stäben aufruht und somit nicht zurück transportiert wird.

Die gattungsgemäßen Bunker haben sich in der Praxis hervorragend bewährt.

Aus der DE 1 266 688 A ist eine Vorrichtung zum dosierten Zuführen von Erntegut aus Erntewagen an eine Schneide- oder Fördermaschine bekannt, bei welcher ein Horizontalförderer als biegsame, unmittelbar auf einer Bodenauflage ausgebreitete Fördermarke ausgebildet ist.

Aus der DE 297 19 067 U1 ist ein Schubboden-Regal bekannt, welches insbesondere als Schwerlast-Schubboden-Regal ausgestaltet sein kann, und bei dem an jeder Seiten Wange der Schubböden ein Getriebemotor angeordnet ist, dessen Antriebswelle durch die Seitenwange geführt ist.

Aus der DE 10 2010 019 801 A1 ist ein Schubboden System zur Austragung von kleinstückigem Schüttgut bekannt, insbesondere von festem Brennstoff wie z.B. Holzhackschnitzel. Mehrere Module sind über ihre jeweiligen Bodenplatten miteinander verbindbar. Neben einem Grundmodul mit dem Antrieb können weitere Module montiert werden, so dass dieses System in einem Vorratsbunker montiert werden kann, ohne dass bauliche Veränderungen des Rohfußbodens des Vorratsbunkers vorgenommen werden müssen.

Aus der DE 10 2008 056 292 A1 ist eine Container-Heizanlage bekannt, bei welcher im Container ein Förderer nach Art eines Schubbodenförderers oder Kratzboden Förderers angeordnet ist.

Aus der DE 197 07 911 A1 ist ein Förderboden zum Transport von Gütern und Entleeren von Behältnissen bekannt, der als Schubboden eine Vielzahl nebeneinander angeordneter Förderbodenelemente aufweist.

Aus der EP 2 258 488 A2 ist eine Antriebsanordnung für einen länglichen Schwingkörper bekannt, welcher sich von mehreren drehangetriebenen Kurbelschwingen mit zueinander parallelen Drehachsen auf einer vorgebbaren Schwingbahn bewegen lässt.

Aus der US 5 323 894 A ist eine hin und her bewegliche Bodenkonstruktion bekannt, also ein Schubboden.

Aus der US 6 439 375 B1 ist ein Schubboden zum Fördern von Paletten und dergleichen bekannt.

Der Erfindung liegt die Aufgabe zugrunde, einen gattungsgemä-ßen Bunker dahingehend zu verbessern, dass dieser besonders vielseitig für die unterschiedlichsten Materialien nutzbar ist.

Diese Aufgabe wird durch einen Bunker nach dem Anspruch 1 gelöst. Vorteilhafte Ausgestaltungen sind in den Unteransprüchen beschrieben.

Die Erfindung schlägt mit anderen Worten vor, dass die Geschwindigkeiten der Stäbe in der so genannten Vorwärtsrichtung, wenn sie das Material nämlich zum stirnseitigen Ende des Bunkers fördern, und bei der Rückwärtsbewegung unterschiedlich sind.

So kann beispielsweise vorgesehen sein, dass die Vorschubgeschwindigkeit der Stäbe in der so genannten Vorwärtsrichtung, wenn sie das Material nämlich zum stirnseitigen Ende des Bunkers fördern, größer ist als bei der Rückwärtsbewegung. So kann beispielsweise bewirkt werden, dass eine Vorderkante des im Bunker bevorrateten Materials, welche am stirnseitigen Ende des Bunkers sich befindet, nach und nach langsam abbröckelt, so dass ein vergleichsweise konstanter Materialstrom erzeugt wird, der aus dem Bunker in eine an den Bunker anschließende weiterverarbeitende Anlage oder Fördereinrichtung gelangt.

Alternativ dazu kann in einem anderen Betriebsmodus des Bodens vorgesehen sein, die Stäbe in Förderrichtung vergleichsweise langsam zu führen, jedoch mit erheblich höherer Geschwindigkeit wieder zurückzuführen. Auf diese Weise kann das im Bunker vorhandene Material vergleichsweise langsam und gleichmäßig einer Dosierwalze zugeführt werden, wenn eine solche am Stirnende des Bunkers vorgesehen ist, so dass dieser Dosierwalze konstant das Bunkermaterial zugeführt wird und von der Dosierwalze abgenommen werden kann. Das schnelle Zurückführen einzelner Stäbe bewirkt dabei einen möglichst konstanten, unterbrechungsfreien Vorschub des Materials zu der Dosierwalze.

Je nach Größe des Bunkers, dementsprechend also je nach der Breite des Bodens und dementsprechend der Anzahl der verwendeten Stäbe kann vorgesehen sein, zwei Stäbe gleichzeitig antreiben zu lassen. Insbesondere bei den kleineren Bunkern kann jedoch vorteilhaft jedem Stab ein eigener Antrieb zugeordnet sein, so dass beispielsweise kleinere Bunker einen Boden mit nur drei Stäben aufweisen können, wobei jeder Stab individuell angetrieben ist und dementsprechend individuell das Bewegungsverhalten des einzelnen Stabes mittels der Steuerung beeinflusst werden kann.

Dabei sind außer den beiden beschriebenen Modi, die sich durch die unterschiedlichen Förder- und Rückzugsgeschwindigkeiten unterscheiden, auch noch insofern unterschiedliche Betriebsmodi des Bodens möglich, die sich dadurch unterscheiden, welche der Stäbe gleichzeitig vor- oder zurücklaufen und in welchen unterschiedlichen Relativgeschwindigkeiten zueinander.

Vorteilhaft kann vorgesehen sein, die Stäbe des Bodens nicht hydraulisch, sondern elektrisch anzutreiben. Hierdurch ergeben sich zwei Vorteile: Einerseits kann der elektrische Antrieb kostengünstiger realisiert werden, und andererseits ermöglicht der elektrische Antrieb durch eine entsprechende Steuerung sehr individuelle Bewegungsprogramme für die einzelnen Stäbe, so dass die Arbeitsweise des Bodens an unterschiedlichste Anforderungen angepasst werden kann. Ohne Veränderung der dabei verwendeten Komponenten, also der Hardware, kann diese Anpassung allein durch unterschiedliche Bewegungsprogramme der Stäbe bewirkt werden, so dass mit einfachen und kostengünstigen Mitteln, lediglich durch eine Umprogrammierung der verwendeten Steuerung die für den Antrieb der Elektromotoren vorgesehen ist, die Anpassung des Bunkers an unterschiedliche Betriebsverhältnisse bewirkt werden kann.

Insbesondere wenn in der Steuerung unterschiedliche Betriebsmodi der Elektromotoren bzw. der Stäbe des Bodens hinterlegt sind, kann nicht nur bei der Auslieferung des Bunkers die gewünschte Anpassung des Bodens vorgenommen werden, sondern auch durch den Betreiber selbst kann später die Steuerung einfach in einen anderen gewünschten Betriebsmodus umgeschaltet werden, so dass die Fördercharakteristik des Bodens beispielsweise an unterschiedliche im Bunker bevorratete Materialien angepasst werden kann.

Je nach Größe des Bunkers, dementsprechend also je nach der Breite des Bodens und dementsprechend der Anzahl der verwendeten Stäbe kann vorgesehen sein, zwei Stäbe gleichzeitig durch denselben Elektromotor antreiben zu lassen. Insbesondere bei den kleineren Bunkern kann jedoch vorteilhaft jedem Stab ein eigener Elektromotor zugeordnet sein, so dass beispielsweise kleinere Bunker einen Boden mit nur drei Stäben aufweisen können, wobei jeder Stab individuell durch einen eigenen Elektromotor angetrieben ist und dementsprechend individuell das Bewegungsverhalten des einzelnen Stabes mittels der Steuerung beeinflusst werden kann.

Vorteilhaft kann weiterhin vorgesehen sein, dass der Antrieb der einzelnen Stäbe mit Hilfe von Riemen erfolgt. Im Vergleich beispielsweise zu Zug- oder Druckstangen wird so mit vergleichsweise geringem konstruktivem Aufwand und wirtschaftlich vorteilhaft die Übertragung hoher Antriebskräfte vom Elektromotor auf den jeweiligen Stab ermöglicht.

Dabei kann vorteilhaft vorgesehen sein, den Riemen nur in einer Richtung zu belasten, also beispielsweise keinen Mitnehmer vorzusehen, der sich vom Riemen bis zum Stab erstreckt und je nach Bewegungsrichtung des Riemens den Stab vorwärts, in der Förderrichtung oder zurückführt. Vielmehr können zwei Anschlusspunkte am Stab vorgesehen sein, die in entgegengesetzten Richtungen von der Welle aus liegen, die durch den Elektromotor angetrieben ist, so dass je nach Drehrichtung der eine oder der andere Riemen auf Zug beansprucht wird und den Stab dementsprechend in die eine oder in die andere Richtung führt.

Die Steuerung, die zur Beeinflussung der Geschwindigkeit der Elektromotoren und somit der Stäbe dient, kann vorteilhaft Frequenzumrichter einschließen, die den Elektromotoren zugeordnet sind. Durch die Frequenzumrichtung lässt sich bei gleichgroßer, auf den Stab übertragener Kraft die Drehzahl des jeweiligen Elektromotors um den Faktor 10 verändern. Dies dient nicht nur der Anpassung an unterschiedliche Betriebsmodi und die dementsprechend unterschiedlich gewünschten Bewegungsgeschwindigkeiten der Stäbe, sondern dies kann auch zur Materialschonung der Riemen genutzt werden, indem nach einer Bewegungsumkehr des jeweiligen Elektromotors die entsprechende Welle, an die der Riemen anschließt, mit einer gewissen Beschleunigungsrampe auf die gewünschte Drehzahl in der gewünschten Drehrichtung gebracht wird, so dass keine schlagartigen Lasten auf die Riemen einwirken, sondern vielmehr die im Riemen wirksame Spannung allmählich aufgebaut wird.

Die Steuerung kann vorteilhaft dadurch vereinfacht werden, dass zur Bestimmung der jeweiligen Position eines jeden Stabes keine Sensoren, Näherungsschalter o. dgl. dem Stab selbst zugeordnet sind, sondern vielmehr dem Elektromotor, der den Riemen antreibt. Beispielsweise kann auf der erwähnten Welle, oder auf der Abtriebswelle des Elektromotors, oder, wenn der Elektromotor in Form eines Getriebemotors ausgestaltet ist, auf einem beweglichen Bauteil des Getriebes eine Markierung vorgesehen sein, die mit einem Drehzahlsensor zusammenwirkt, so dass aufgrund der Umdrehungs-Anzahl die Wegstrecke berechnet werden kann, die der Stab jeweils in die eine oder in die andere Richtung zurück gelegt hat und so dass dementsprechend Haltepunkte bzw. Umkehrpunkte für die Bewegung des Stabes auf einfache Weise ermittelt werden können.

Zur Schonung des Riemens kann vorteilhaft vorgesehen sein, dass sich der Riemen auf der Welle, von der er angetrieben ist, selbst bekneift, so dass letztlich die Zugkräfte nicht auf die Befestigungsstelle einwirken, wo der Riemen an der Welle festgelegt ist. Aus diesem Grund kann vorteilhaft vorgesehen sein, dass der Riemen stets mehrfach um die Welle gewickelt verläuft, auch wenn er maximal weit von der Welle abgezogen ist, wenn sich also der vom Riemen angetriebene Stab in einer Endstellung seiner Bewegung befindet.

Die erwähnte Spreizung um den Faktor 10, was die Drehzahl des Elektromotors und somit die Antriebsgeschwindigkeit der Stäbe angeht, kann noch weiter dadurch gespreizt werden, dass mittels der Steuerung die Elektromotore nicht mit konstanter Drehzahl angetrieben werden, sondern in einem getakteten Modus, in welchem die Stäbe für kurze Zeit stillstehen. Anders als sie auch jeweils bei einer Umkehr ihrer Bewegungsrichtung stillstehen, ist in diesem getakteten Modus jedoch vorgesehen, dass die Bewegungsrichtung des jeweiligen Stabes beibehalten wird, der Stab also beispielsweise in seiner Vorwärts- oder Förderrichtung bewegt wird, dann für einen gewissen Zeitraum angehalten wird und anschließend erneut in dieser bisherigen Bewegungsrichtung für eine gewisse Wegstrecke angetrieben wird, bis er erneut für eine bestimmte Zeitspanne angehalten wird. Die Proportionen zwischen den Stillstands- und den Antriebsintervallen können dabei verlängert werden, so dass letztlich die Fördergeschwindigkeit des gesamten Bodens, also die Geschwindigkeit, mit welcher das Material zu einem Stirnende des Bunkers gefördert werden kann, um den Faktor 100 beeinflusst werden kann, so dass eine feinfühlige Anpassung an unterschiedlichste Betriebsbedingungen oder unterschiedlichste im Bunker befindliche Materialien möglich ist.

Zu Gunsten einer zuverlässigen Restentleerung des Bunkers kann vorteilhaft eine Schürze vorgesehen sein, die mit einem unteren Abschnitt auf dem Boden aufliegt, und sich von dort nach oben erstreckt. Das Material liegt auf diesem unteren Abschnitt der Schürze auf, und wenn die einzelnen Stäbe des Bodens hin und her bewegt werden, wird nicht nur das Material, sondern auch dieser untere Abschnitt der Schürze in Förderrichtung des Bodens gefördert, so dass hinter der Schürze kein Material auf dem Boden des Bunkers zurückbleibt. Zu diesem Zweck ist die Schürze in Förderrichtung des Bodens beweglich gelagert.

Vorteilhaft kann vorgesehen sein, dass die Schürze nicht stets zusammen mit dem Material durch den Bunker hindurch gefördert wird. Typischerweise wird nur eine Materialsorte in dem Bunker gelagert, und nach Leerung des Bunkers wird gleichartiges Material wieder in den Bunker eingefüllt. In diesem Fall ist meistens unter praktischen Gesichtspunkten eine vollständige Restentleerung des Bunkers nicht von großer Bedeutung. Falls jedoch ein Materialwechsel durchgeführt wird und eine Vermischung des neuen Materials mit Resten des alten Materials nicht gewünscht ist, kann die erwähnte Schürze genutzt werden. Zu diesem Zweck kann vorteilhaft die Schürze derart ausgestaltet sein, dass sie wahlweise mit ihrem unteren Abschnitt auf dem Boden aufliegt, also vom dann in den Bunker eingefüllten Material bedeckt wird und automatisch mitgenommen wird, oder dass dies bewusst nicht der Fall ist.

Zu diesem Zweck kann vorteilhaft vorgesehen sein, dass sich die Stürze über die gesamte Höhe des Bunkers erstreckt und oberhalb des Bunkers eine Umlenkachse angeordnet ist. Von dieser Umlenkachse hängt die Schürze nach unten, so dass der untere Abschnitt auf dem Boden aufliegt. Allerdings ist die Schürze um die erwähnte Umlenkachse beweglich geführt, so dass sie mittels einer dementsprechenden Bewegung angehoben werden kann und ihr unterer Abschnitt vom Boden anhebbar ist. In diesem Fall wird beim anschließenden Befüllen des Bunkers der untere Abschnitt der Schürze nicht von Material bedeckt, so dass die Schürze dementsprechend nicht mit dem Material zusammen über den Boden gefördert wird, sondern vielmehr materialschonend ungenutzt bleibt und nur im Bedarfsfall genutzt zu werden braucht.

In einer ersten Ausgestaltung kann diese erwähnte Umlenkachse als Wickelwelle ausgestaltet sein, so dass die Schürze auf die Umlenkachse aufgewickelt werden kann, bis der untere Abschnitt der Schürze vom Boden frei ist.

In einer zweiten Ausgestaltung kann die Umlenkachse zwischen dem unteren Abschnitt und einem so genannten oberen Ende der Schürze angeordnet sein. Dieses obere Ende kann gegenüber der Umlenkachse bewegt werden. Mit zunehmender Entfernung gegenüber der Umlenkachse wird dementsprechend die Schürze von unten bis zur Umlenkachse angehoben und zwar wenigstens so weit, dass der untere Abschnitt der Schürze vom Boden frei kommt.

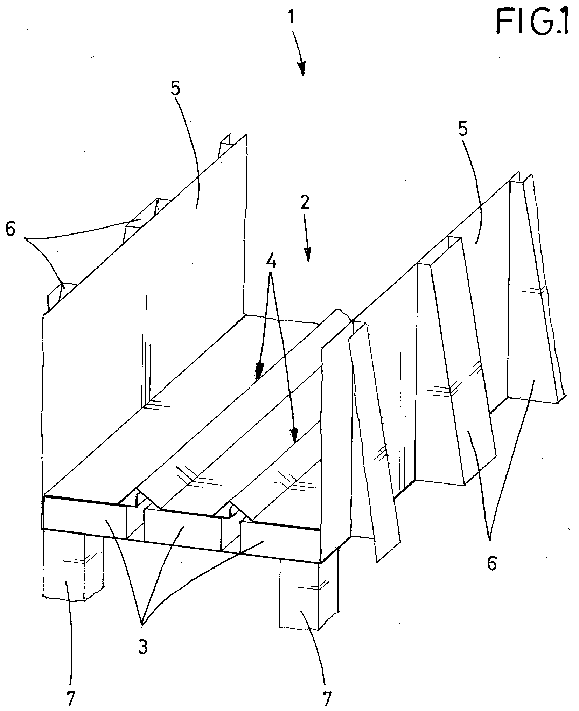

Ein Ausführungsbeispiel der Erfindung wird anhand der rein schematischen Darstellungen nachfolgend näher erläutert. Dabei zeigt
- Fig. 1: schematisch eine Ansicht in Längsrichtung des Bunkers, und
- Fig. 2: eine Ansicht quer zur Ansicht von Fig. 1 auf einen Stab des Bodens und dessen Antriebsmittel, sowie auf eine Schürze.

In den Zeichnungen ist mit 1 jeweils insgesamt ein Bunker bezeichnet, der zur Aufnahme von Schüttgut vorgesehen ist. Der Bunker 1 ist vergleichsweise klein, mit einem geringen Fassungsvermögen ausgestaltet, und weist einen Boden 2 auf, der als Förderboden in Art eines so genannten Walking Floor ausgestaltet ist. Aufgrund der vergleichsweise geringen Abmessungen des Bunkers 1 ist der Boden 2 mit lediglich drei parallelen Stäben 3 ausgestaltet, wobei jeder Stab etwa 400 mm breit ist, so dass der Boden 2 insgesamt eine Breite von etwa 1200 mm aufweist. Die einzelnen Stäbe 3 überlappen sich dabei, um Spalten innerhalb des Bodens 2 möglichst zu vermeiden. Aus diesem Grund weisen die Stäbe 3 an ihrer Oberseite Rippen 4 auf, in dem Bereich, in dem sie möglichst spaltarm an einen benachbarten Stab 3 anschließen.

Der Bunker 1 des dargestellten Ausführungsbeispiels ist als Stahlkonstruktion ausgestaltet und weist zwei Seitenwände 5 auf, die auf ihrer Außenseite durch Spanten 6 ausgesteift sind. Unterhalb des Bodens 2 sind Stützen 7 angeordnet, so dass das vom Boden 2 aus dem Bunker 1 heraus geförderte Material beispielsweise in einem darunter aufgestellten Container oder eine darunter befindliche Förderanlage fallen kann.

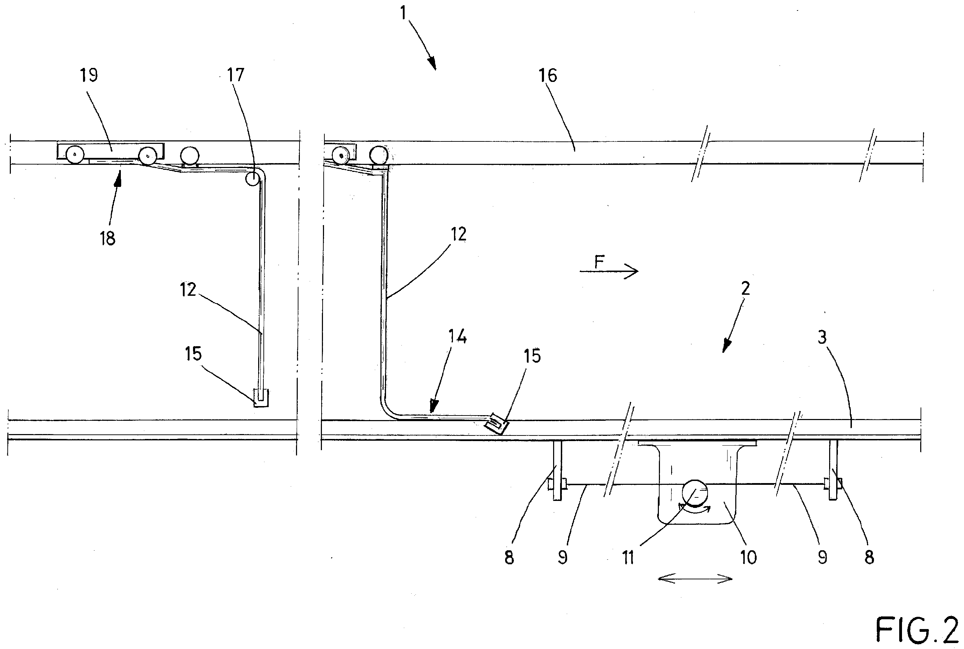

Fig. 2 zeigt eine Seitenansicht, bei der die Seitenwände 5 und die Stützen 7 aus Übersichtlichkeitsgründen nicht dargestellt sind. Vielmehr ist aus Fig. 2 ersichtlich, dass die Stäbe 3 jeweils zwei Mitnehmer 8 aufweisen, die als Anschlusspunkte für jeweils einen Riemen 9 dienen. Zwischen den beiden Mitnehmern 8 ist ein als Getriebemotor ausgestalteter Elektromotor 10 angeordnet, der eine Welle 11 antreibt, an welche die beiden Riemen 9 anschließen. Je nach Drehrichtung des Elektromotors 10 wird der eine oder der andere Riemen 9 auf Zug belastet und dementsprechend der Stab 3 in der einen oder in der anderen Richtung bewegt.

Aus Fig. 2 ist weiterhin ersichtlich, dass am hinteren Ende des Bunkers 1 eine Schürze 12 angeordnet ist. In einer ersten Anordnung ist ersichtlich, dass die Schürze 12 einen unteren Abschnitt 14 aufweist, der auf dem Boden 2 aufliegt. Die Unterkante der Schürze 12, also das freie Ende des unteren Abschnitts 14, ist von einem U-förmigen Metallprofil 15 eingefasst. Die untere Kante der Schürze 12 verläuft dabei nicht geradlinig, sondern weist zwei dreieckige Einschnitte auf, nämlich dort, wo sich die Rippen 4 des Bodens 2 befinden, so dass letztlich am unteren Ende der Schürze 12 drei Zungen gebildet werden, die jeweils auf einem der Stäbe 3 aufliegen.

Die Schürze 12 ist in einer Laufschiene 16 beweglich gelagert und kann in der durch einen Pfeil gekennzeichneten Förderrichtung F zusammen mit dem Material bis zum Ausgabeende des Bunkers 1 gefördert werden und anschließend in dieser Laufschiene 16 wieder zurück in ihre Ausgangsstellung bewegt werden.

Soll die Schürze 12 nicht genutzt werden, so kann sie um eine Umlenkachse 17 geführt werden: Dem unteren Abschnitt 14 entgegengesetzt befindet sich jenseits der Umlenkachse 17 ein oberes Ende 18 der Schürze 12 in einem Wagen 19. Wenn dieser Wagen 19 entgegen der Förderrichtung F von der Umlenkachse 17 entfernt wird, so wird der von der Umlenkachse 17 herabhängende Teil der Schürze 12 nach oben gezogen und über die Umlenkachse 17 geführt, und zwar bis in eine Stellung, die in Fig. 2 ebenfalls angedeutet ist, und in welcher der untere Abschnitt 14 frei vom Boden 2 kommt, so dass bei einer nächsten Befüllung des Bunkers 1 kein Material auf diesem unteren Abschnitt 14 aufliegt und die Schürze 12 dementsprechend nicht zusammen mit dem Material auf den Boden 2 gefördert wird.

## Patentansprüche

1. Zum Speichern von Material dienender Bunker (1), mit einem vor und zurück bewegliche Stäbe (3) aufweisenden, als so genannter "Walking Floor" ausgestalteten Boden (2),
wobei die Stäbe (3) in einer so genannten Vorwärtsrichtung, wenn mehrere Stäbe (3) das Material in Förderrichtung des Walking Floors transportieren, und eine vergleichsweise geringere Anzahl von Stäben (3) in einer Rückwärtsbewegung zurückgezogen werden,
**dadurch gekennzeichnet,**
**dass** die Geschwindigkeiten der Stäbe (3) in der Vorwärtsrichtung und bei der Rückwärtsbewegung unterschiedlich sind.

2. Bunker nach Anspruch 1,
**dadurch gekennzeichnet,**
**dass** die Vorschubgeschwindigkeit der Stäbe (3) in der Vorwärtsrichtung größer ist als bei der Rückwärtsbewegung.

3. Bunker nach Anspruch 1,
**dadurch gekennzeichnet,**
**dass** die die Stäbe (3) in Förderrichtung vergleichsweise langsam geführt sind, jedoch mit erheblich höherer Geschwindigkeit wieder zurückgeführt sind.

4. Bunker nach Anspruch 3,
**dadurch gekennzeichnet,**
**dass** einzelne Stäbe (3) schnell zurückgeführt werden.

5. Bunker nach einem der vorhergehenden Ansprüche,
**dadurch gekennzeichnet,**
**dass** die Stäbe (3) durch Elektromotore (10) angetrieben sind,
wobei jeweils ein Riemen (9) von einer durch den Elektromotor (10) angetriebenen Welle (11) zu dem jeweiligen Stab (3) verläuft,
und wobei den Elektromotoren (10) eine die Drehzahl der Elektromotoren (10) beeinflussende Steuerung zugeordnet ist,
derart, dass wenigstens zwei Stäbe (3) in unterschiedlicher Geschwindigkeit und / oder unterschiedlicher Richtung antreibbar sind.

6. Bunker nach Anspruch 5,
**dadurch gekennzeichnet,**
**dass** jeweils ein zweiter Riemen (9), in einer zum ersten Riemen (9) entgegengesetzten Richtung, von einer durch den Elektromotor (10) angetriebenen Welle (11) zu dem jeweiligen Stab (3) verläuft,
derart, dass jeder Riemen (9) ausschließlich auf Zug belastet wird und ein Riemen (9) ausschließlich die Vor- und der andere Riemen (9) ausschließlich die Rück-Bewegung des jeweiligen Stabes (3) bewirkt.

7. Bunker nach Anspruch 5 oder 6,
**dadurch gekennzeichnet,**
**dass** den Elektromotoren (10) Frequenzumrichter zugeordnet sind.

8. Bunker nach Anspruch 7,
**dadurch gekennzeichnet,**
**dass** jedem Elektromotor (10) ein Frequenzumrichter zugeordnet ist.

9. Bunker nach einem der Ansprüche 5 bis 8,
**dadurch gekennzeichnet,**
**dass** der Riemen (9) auch noch in seiner am weitesten von der Welle (11) abgezogenen Situation, entsprechend einer der beiden Endstellungen des zugeordneten Stabes (3), um die Welle (11) gewickelt verläuft.

10. Bunker nach einem der Ansprüche 5 bis 9,
**dadurch gekennzeichnet,**
**dass** die die Drehzahl der Elektromotoren (10) beeinflussende Steuerung derart ausgestaltet ist, dass die Stäbe (3) in einem so genannten getakteten Modus intermittierend antreibbar sind,
derart, dass sie unter Beibehaltung ihrer jeweiligen Bewegungsrichtung abwechselnd still stehen und angetrieben sind.

11. Bunker nach einem der vorhergehenden Ansprüche,
**dadurch gekennzeichnet,**
**dass** eine sich aufwärts erstreckende Schürze (12) in Förderrichtung (F) des Bodens (2) beweglich gelagert ist, wobei die Schürze (12) einen unteren Abschnitt (14) aufweist, der auf dem Boden (2) aufliegt und sich in Förderrichtung (F) des Bodens (2) erstreckt.

12. Bunker nach Anspruch 11,
**dadurch gekennzeichnet,**
**dass** sich die Schürze (12) über die Höhe des Bunkers (1) erstreckt und oberhalb des Bunkers (1) eine Umlenkachse (17) angeordnet ist, um welche die Schürze (12) derart beweglich geführt ist, dass ihr unterer Abschnitt (14) vom Boden (2) anhebbar ist.

13. Bunker nach Anspruch 12,
**dadurch gekennzeichnet,**
**dass** die Umlenkachse (17) als Wickelwelle ausgestaltet ist, derart, dass die Schürze (12) auf die Umlenkachse (17) aufwickelbar ist, bis der untere Abschnitt (14) der Schürze (12) vom Boden (2) frei ist.

14. Bunker nach Anspruch 12,
**dadurch gekennzeichnet,**
**dass** die Schürze (12) von ihrem unteren Abschnitt (14) bis über die Umlenkachse (17) hinaus verläuft bis zu einem dem unteren Abschnitt (14) entgegengesetzten so genannten oberen Ende (18),
wobei dieses obere Ende (18) in Bezug auf die Umlenkachse (17) beweglich gelagert ist, derart, dass entsprechend dem veränderlichen Abstand zwischen der Umlenkachse (17) und dem oberen Ende (18) der untere Abschnitt (14) der Schürze (12) anhebbar ist, bis er vom Boden (2) frei ist.

15. Bunker nach einem der Ansprüche 5 bis 10,
**dadurch gekennzeichnet,**
**dass** zur Positionserkennung eines Stabes (3) ein Umdrehungszähler an einem der drehbeweglichen Elemente vom Elektromotor (10) bis zu der den Riemen (9) antreibenden Welle (11) angeordnet ist.
